# EUROPÄISCHE PATENTANMELDUNG

(11) **EP 1 416 399 A1**
(43) Veröffentlichungstag der Anmeldung: **06.05.2004**
(21) Anmeldenummer: 03020283.2
(22) Anmeldetag: 08.09.2003
(51) Int. Cl.: G06F 17/30

(54) **Verarbeitung von Daten in generischer und spezifischer Darstellungsform**

(30) Priorität: 30.10.2002 DE 10250643
(71) Anmelder: SIEMENS AKTIENGESELLSCHAFT, 80333 München (DE)
(72) Erfinder: Bürgel, Marcus, 90562 Heroldsberg (DE); Frank, Edgar, 90461 Nürnberg (DE); Heller, Rainer, 90542 Eckental (DE); Kulzer, Heinrich, 90475 Nürnberg (DE); Wissmann, Dieter, Dr., 91361 Pinzberg (DE)

(57) **Zusammenfassung**

Die Erfindung betrifft ein System sowie ein Verfahren zur Strukturierung, Speicherung und Verarbeitung von Daten. Um die Verarbeitung von Daten zu vereinfachen, die gemäß unterschiedlichen Schemata strukturiert sind, verwendet das System ein erstes Schema zur Beschreibung der Struktur der Daten, welches ein Objektmodell (10) mit Grundtypen definiert, wobei die Grundtypen unterschiedliche Strukturierungsformen der Daten beschreiben, ein zweites Schema zur generischen Beschreibung der Struktur der Daten, welches auf dem ersten Schema basiert, wobei das zweite Schema von den Grundtypen abgeleitete generische Typen definiert und ein drittes Schema zur spezifischen Beschreibung der Struktur der Daten, welches auf dem ersten Schema basiert, wobei das dritte Schema von den Grundtypen abgeleitete spezifische Typen definiert, wobei mit Hilfe des zweiten und des dritten Schemas beliebige Daten strukturiert geschrieben, gespeichert und gelesen werden können.

## Beschreibung

Die Erfindung betrifft ein System sowie ein Verfahren zur Verarbeitung von Daten in generischer und spezifischer Darstellungsform.

Bei der Ablage von Daten wird häufig ein spezifisches Schema zur Beschreibung der Struktur der Daten verwendet. In manchen Fällen ist es jedoch nicht möglich, ein sinnvolles Schema anzugeben, da sich die Struktur der Daten sehr dynamisch ändert. Für diese Fälle ist es von Vorteil, ein einziges Schema anzugeben, das die Struktur der Daten beschreibt. Dieses Schema muss dann einen relativ allgemeinen Aufbau haben, damit die Erfordernisse aller Applikationen, die Daten in diesem Schema ablegen wollen, erfüllt werden können. Im Folgenden wird dieses Schema generisches Schema genannt, im Gegensatz zu einem spezifischen Schema, das jeweils auf eine bestimmte Datenstruktur zugeschnitten ist. Die Typen, die in einem generischen Schema definiert werden, werden im Folgenden als generische Typen bezeichnet. Generische Darstellung von Daten soll heißen, dass die Daten einem generischen Schema gehorchen. Applikationen, die sowohl Daten lesen möchten, die einem spezifischen Schema genügen, als auch Daten, die einem generischen Schema folgen, müssen üblicherweise zwei verschiedene Wege bereitstellen, diese Daten zu lesen.

Der Erfindung liegt die Aufgabe zugrunde, die Verarbeitung von Daten zu vereinfachen, die gemäß unterschiedlichen Schemata strukturiert sind.

Diese Aufgabe wird durch ein System zur Strukturierung, Speicherung und Verarbeitung von Daten gelöst,
- mit einem ersten Schema zur Beschreibung der Struktur der Daten, welches ein Objektmodell mit Grundtypen definiert,
wobei die Grundtypen unterschiedliche Strukturierungsformen der Daten beschreiben,
- mit einem zweiten Schema zur generischen Beschreibung der Struktur der Daten, welches auf dem ersten Schema basiert,
wobei das zweite Schema von den Grundtypen abgeleitete generische Typen definiert,
- mit einem dritten Schema zur spezifischen Beschreibung der Struktur der Daten, welches auf dem ersten Schema basiert,
wobei das dritte Schema von den Grundtypen abgeleitete spezifische Typen definiert,
wobei mit Hilfe des zweiten und des dritten Schemas beliebige Daten strukturiert geschrieben, gespeichert und gelesen werden können.

Diese Aufgabe wird durch ein Verfahren zur Strukturierung, Speicherung und Verarbeitung von Daten gelöst, bei welchem
- ein erstes Schema eine Struktur der Daten beschreibt und ein Objektmodell mit Grundtypen definiert, wobei die Grundtypen unterschiedliche Strukturierungsformen der Daten beschreiben,
- ein zweites Schema die Struktur der Daten generisch beschreibt, wobei das zweite Schema auf dem ersten Schema basiert und von den Grundtypen abgeleitete generische Typen definiert,
- ein drittes Schema die Struktur der Daten spezifisch beschreibt, wobei das dritte Schema auf dem ersten Schema basiert und von den Grundtypen abgeleitete spezifische Typen definiert,
wobei mit Hilfe des zweiten und des dritten Schemas beliebige Daten strukturiert geschrieben, gespeichert und gelesen werden.

Die Erfindung schlägt einen Mechanismus vor, mit dem man Daten gleichberechtigt aus einem generischen und aus spezifischen Schemas lesen und schreiben kann. Bisher wurden Daten entweder nur in generischer oder nur in spezifischer Darstellungsweise gelesen, oder es mussten zwei verschiedene Lese- bzw. Schreib-Algorithmen implementiert werden. Die Erfindung ermöglicht durch die Verwendung eines gemeinsamen Grundschemas für die generischen und die spezifischen Darstellungsweisen der Daten, dass die beiden Repräsentationen von Applikationen, die Daten lesen oder schreiben wollen, gleich behandelt werden können. Das beiden Repräsentationen zu Grunde liegende erste Schema wird im Folgenden auch primitives Schema genannt.

Zur Vereinfachung der Transformation von Daten, welche gemäß dem dritten Schema strukturiert sind, in Daten, welche gemäß dem zweiten Schema strukturiert sind, wird gemäß einer Ausgestaltung der Erfindung vorgeschlagen, dass jeweils ein Kennzeichnungsname von Elementen des dritten Schemas den Wert eines Attributs in Elementen des zweiten Schemas bildet.

Wenn die Schemata mittels einer erweiterbaren Auszeichnungssprache (z. B. XML) beschrieben werden, erreicht man neben Einheitlichkeit und Erweiterbarkeit auch systematische Validierbarkeit.

Nachfolgend wird die Erfindung anhand der in den Figuren dargestellten Ausführungsbeispiele näher beschrieben und erläutert.

Es zeigen:
- FIG 1: die Grundidee des Objektmodells in Form eines UML-Diagramms und
- FIG 2: ein System zum Engineering einer Automatisierungslösung.

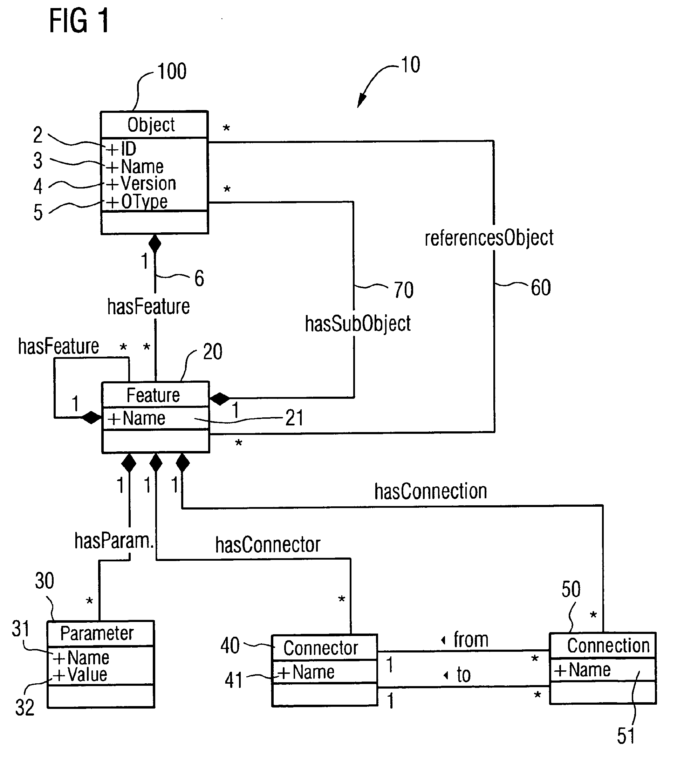

Das primitive Schema beschreibt ein Objektmodell 10 mit den zentralen Grundelementen entsprechend FIG 1. Zu diesem Objektmodell 10 wird im Ausführungsbeispiel ein generisches XML-Schema (XML = Extensible Markup Language) erstellt, das generische Versionen aller dargestellten Typen enthält. Die generischen Typen werden von den Grundtypen abgeleitet. Mit Hilfe des Generischen Schemas können beliebige Daten abgelegt werden, ohne dass ein eigenes spezifisches Schema erstellt werden muss. Daneben können spezifische Objekt-Typen definiert werden, deren Struktur mit einem XML-Schema beschrieben wird. Durch die Verwendung des gemeinsamen Objektmodells 10 kann man Daten in einer spezifischen Darstellungsform in die Darstellungsform des Generischen Schemas transformieren, wenn das spezifische Schema vorliegt.

Dadurch können alle Applikationen beim Lesen der Daten mit den Typen des primitiven Schemas arbeiten. Die eigentlichen Typen der Daten können als Metainformation zur Verfügung gestellt werden. Beim Schreiben der Daten muss dagegen spezifiziert werden, ob die Daten im generischen Schema oder in einem spezifischen Schema abgelegt werden sollen. Durch die Verwendung eines gemeinsamen Grundschemas für sowohl die generische als auch die spezifischen Darstellungsformen ist es möglich, beide Repräsentationen gleichberechtigt zu lesen und zu schreiben. Es ist dadurch möglich, technische Realisierungen, z. B. in Form einer gemeinsam genutzten Softwarekomponente, zu erstellen, die Daten in beliebigen Darstellungsformaten lesen und schreiben können, solange das Format konform zum beschriebenen Objektmodell 10 ist. Die Applikationen können dann Schnittstellen der Softwarekomponente verwenden, die auf einem höheren Abstraktionsniveau liegen als die syntaktische Ebene von XML.

Das obige Grund-Objektmodell 10 sei im Folgenden anhand einer Darstellung als XML-Schema gezeigt:

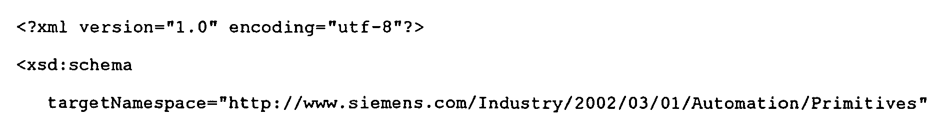

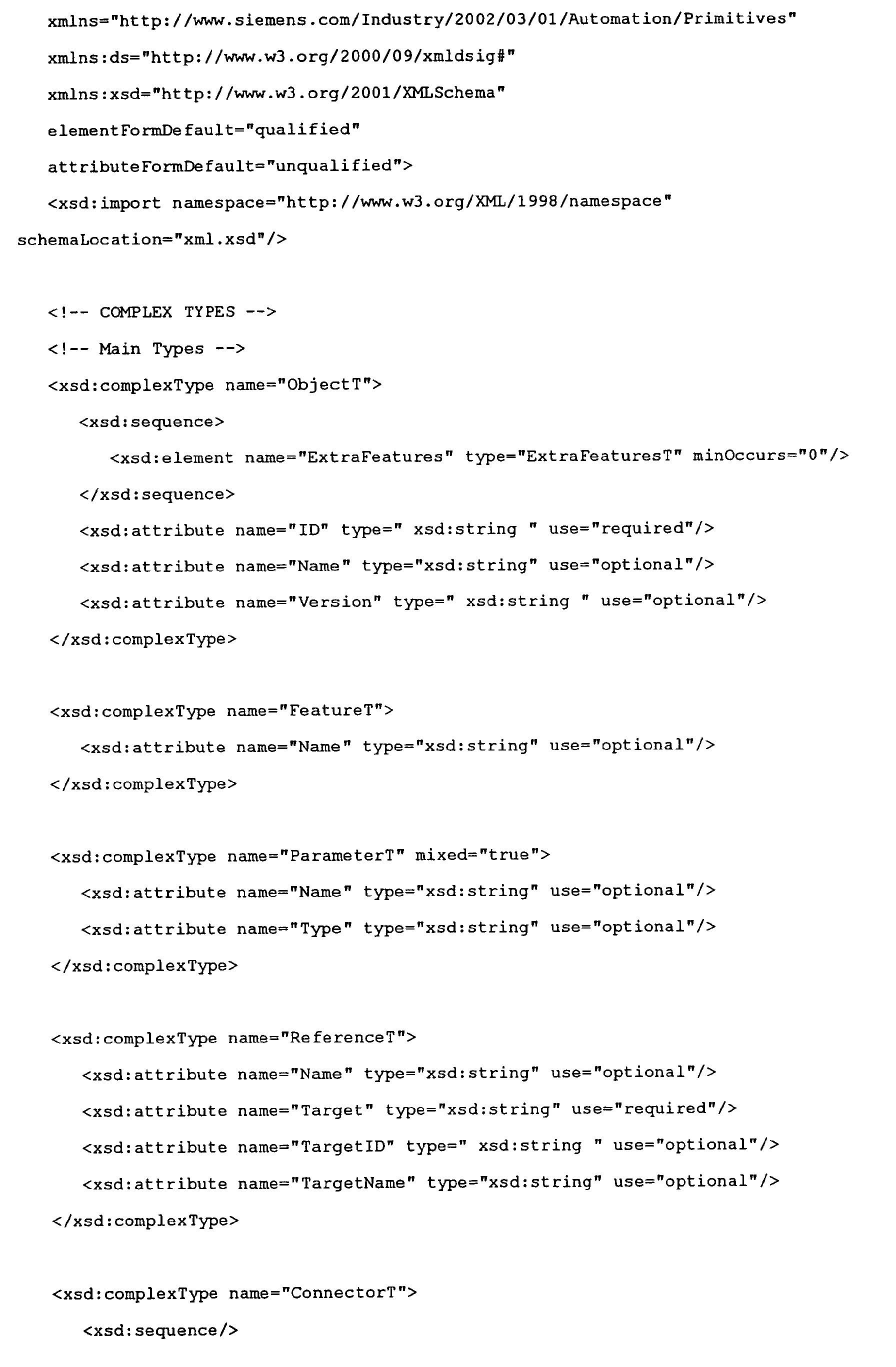

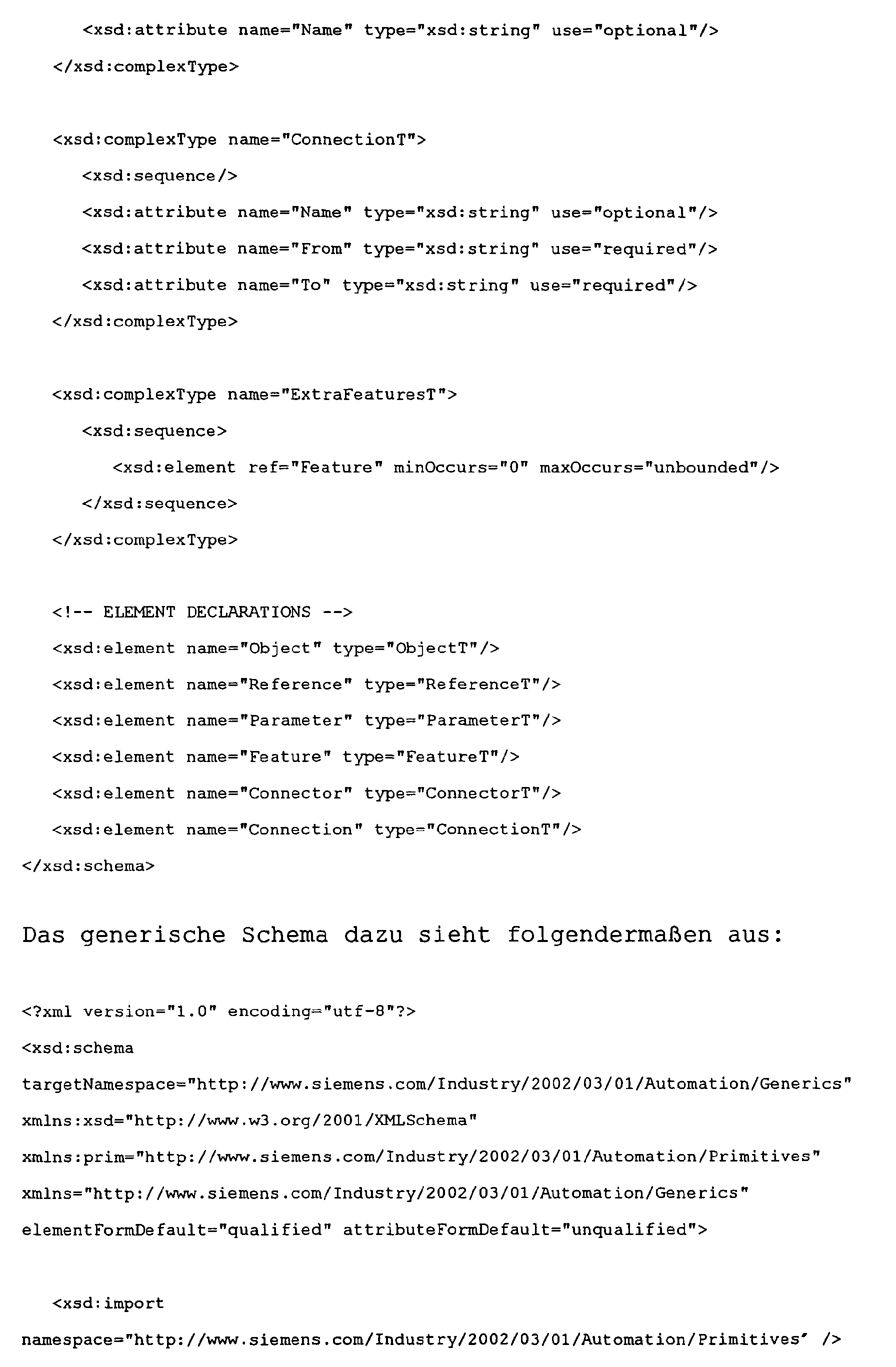

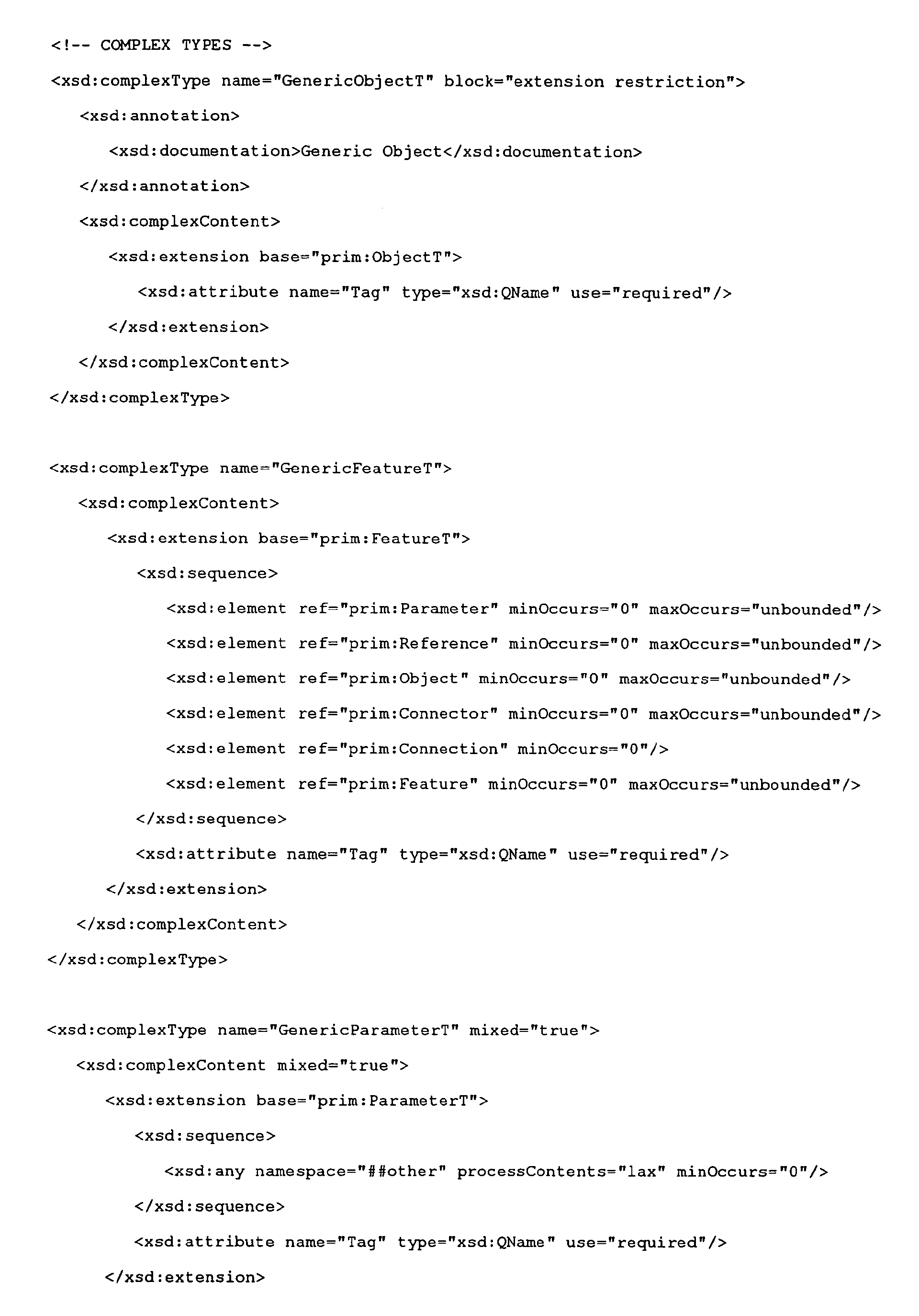

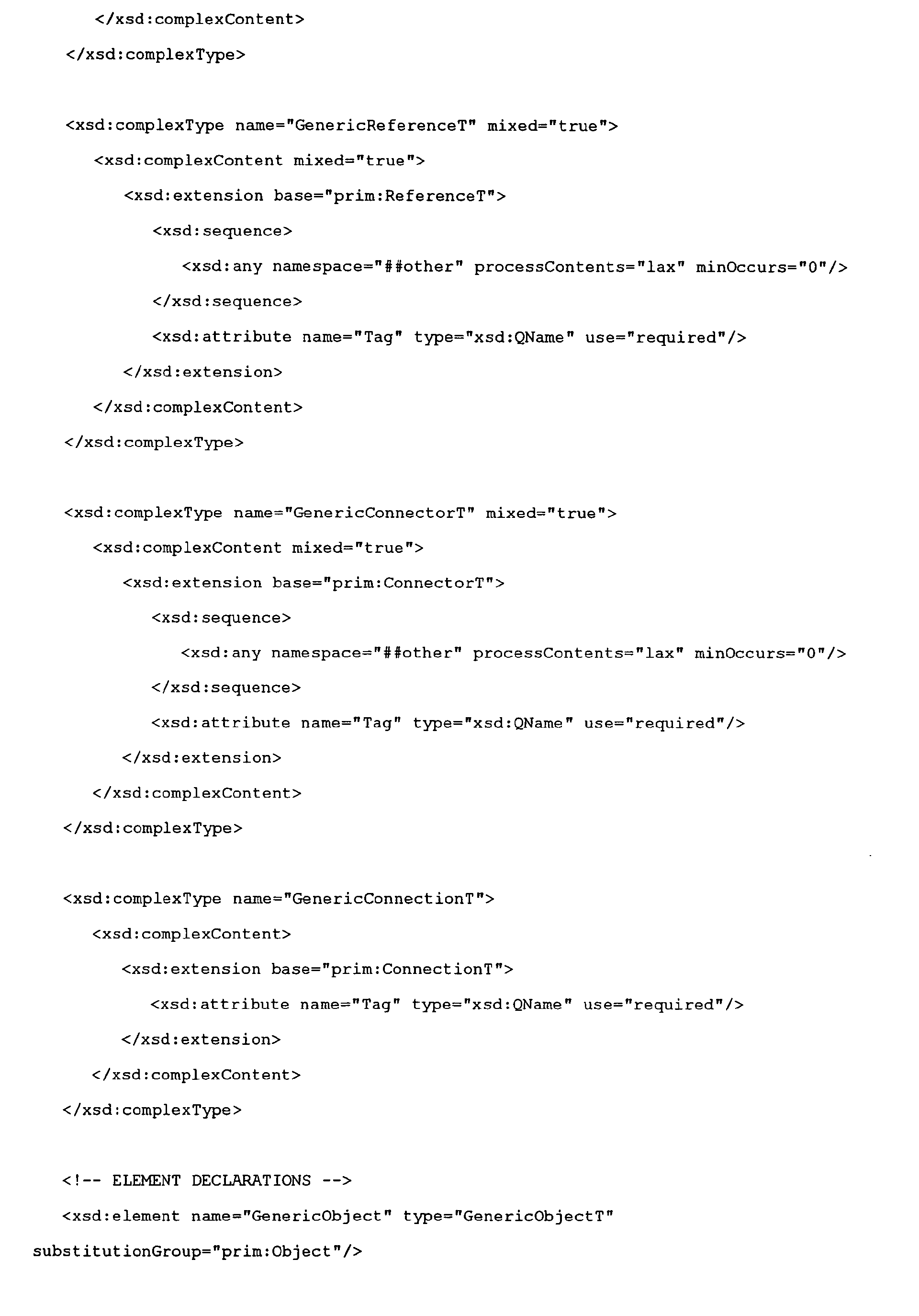

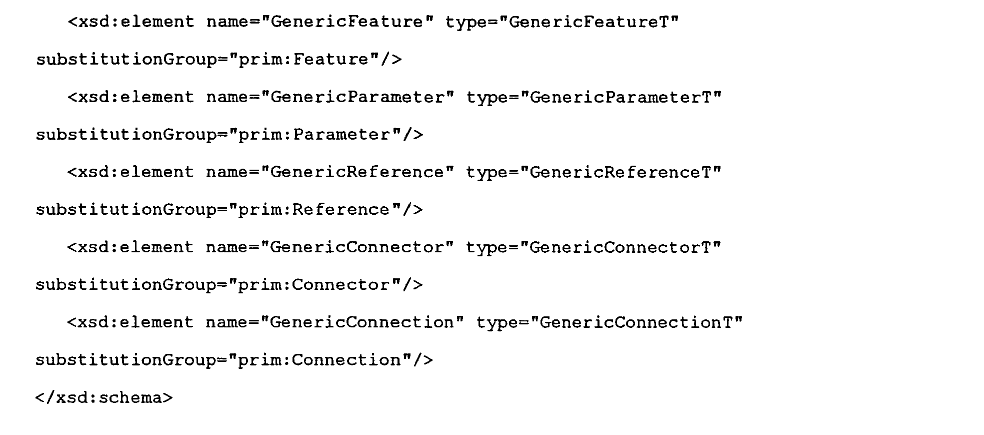

An einem Beispiel sei nun gezeigt, wie man die generische in die spezifische Darstellung überführen kann. Dazu wird eine Beschreibung eines Geräts in XML betrachtet. Das XML-Schema sieht dabei so aus:

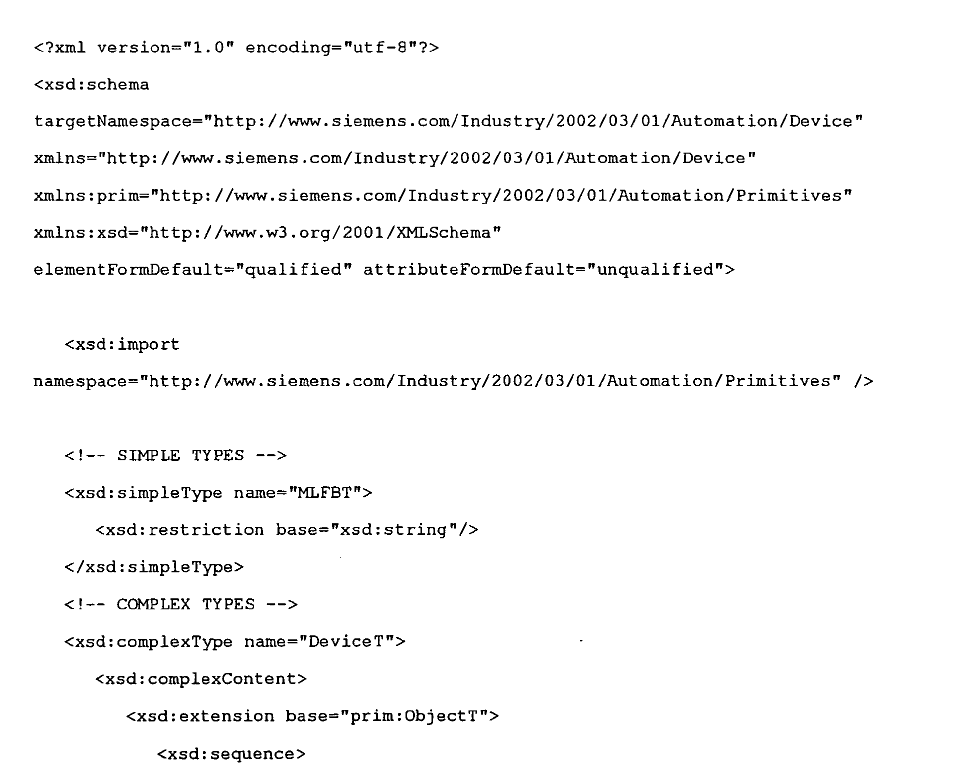

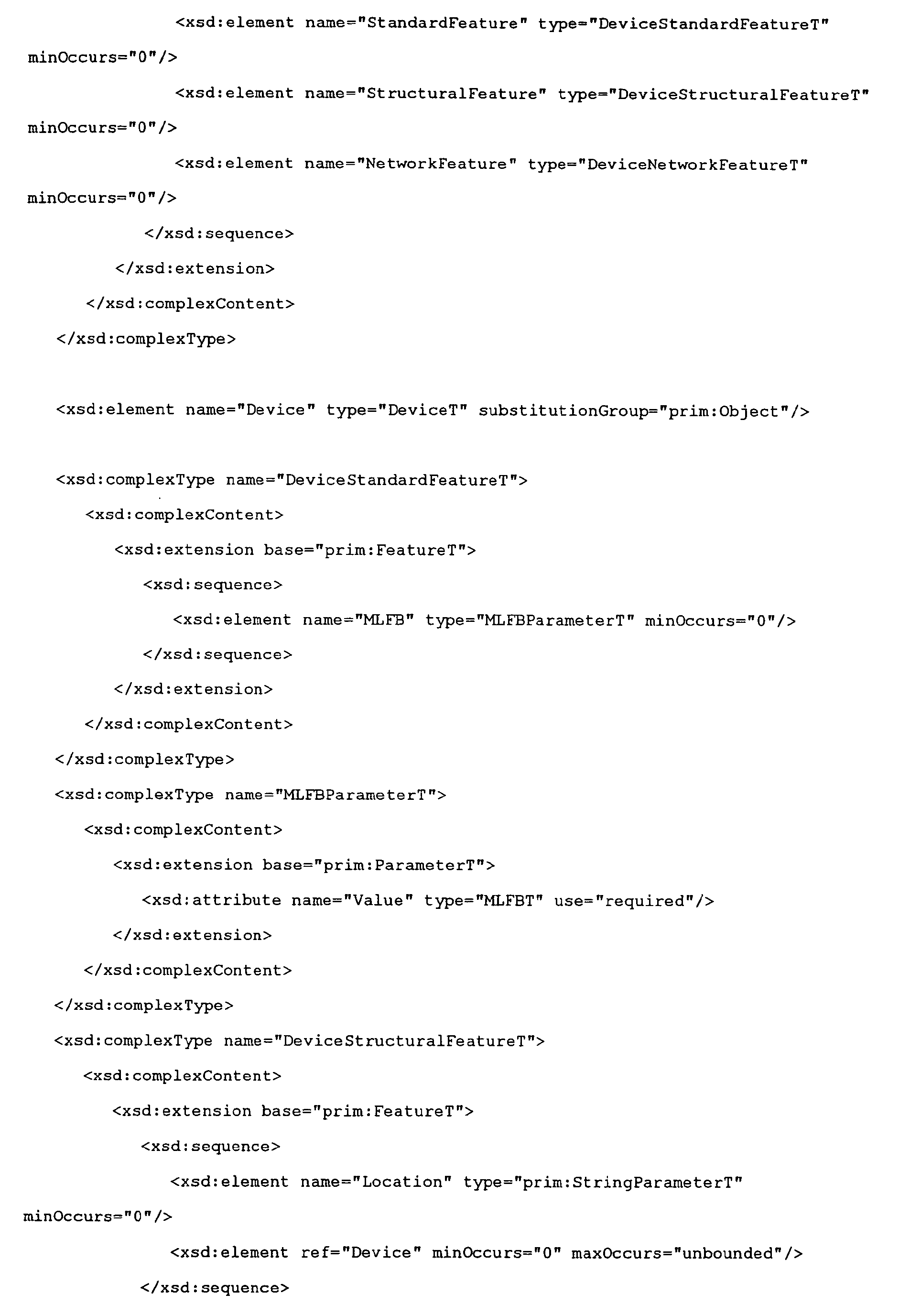

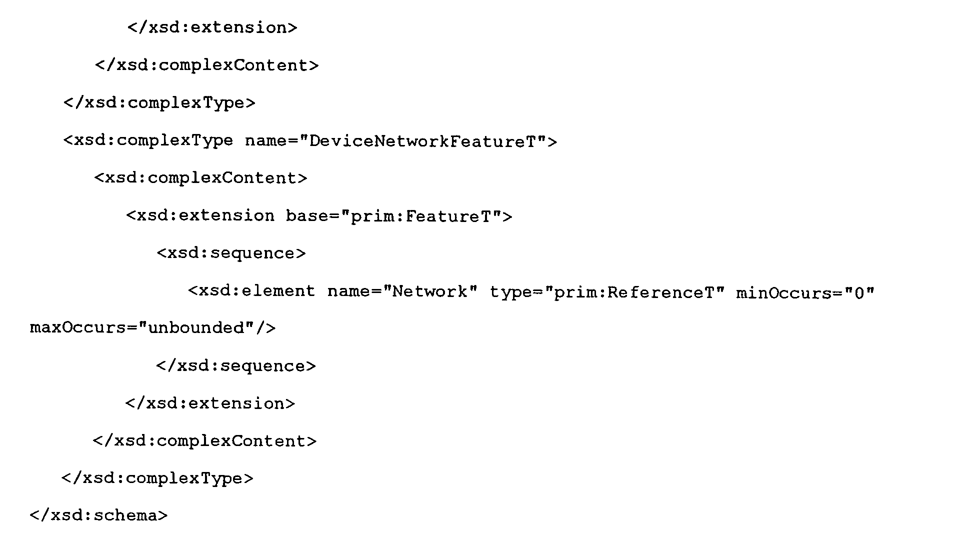

Eine XML-Instanz eines Device, formuliert in diesem Schema, könnte dann zum Beispiel so aussehen:

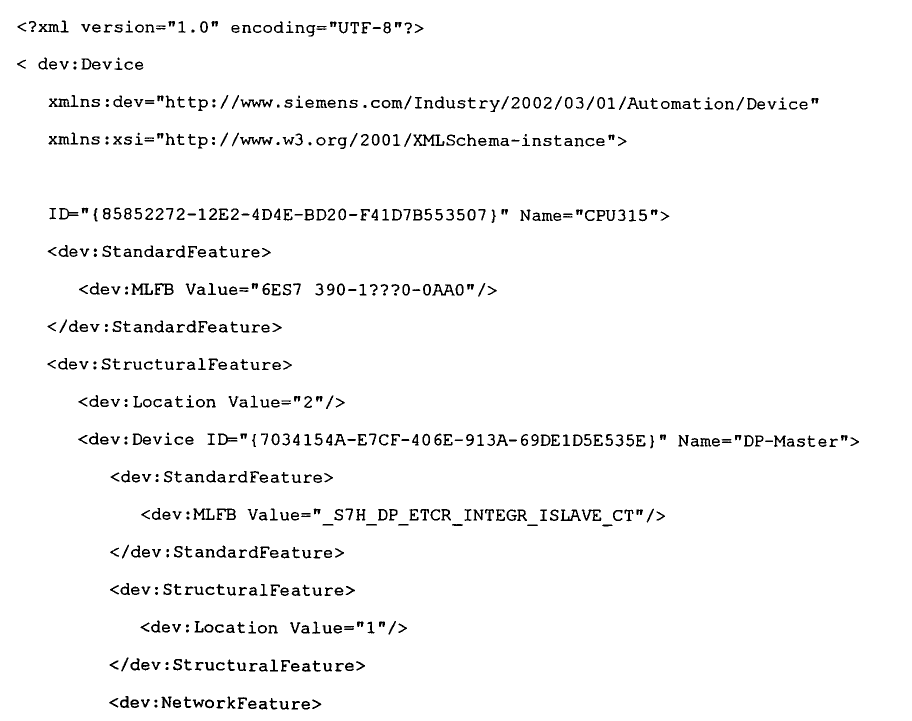

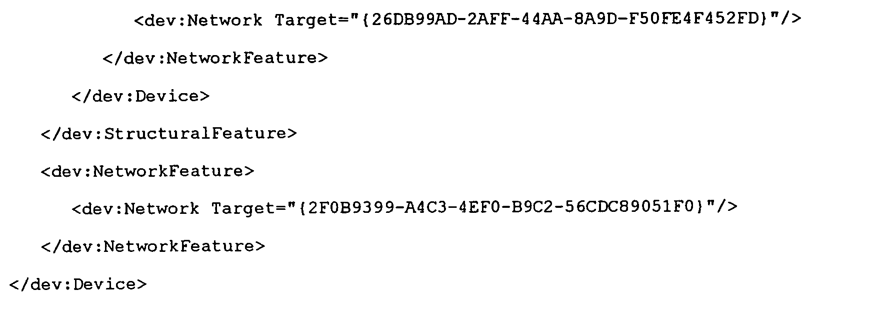

Die äquivalente Repräsentation des Device im generischen Schema würde folgendermaßen aussehen:

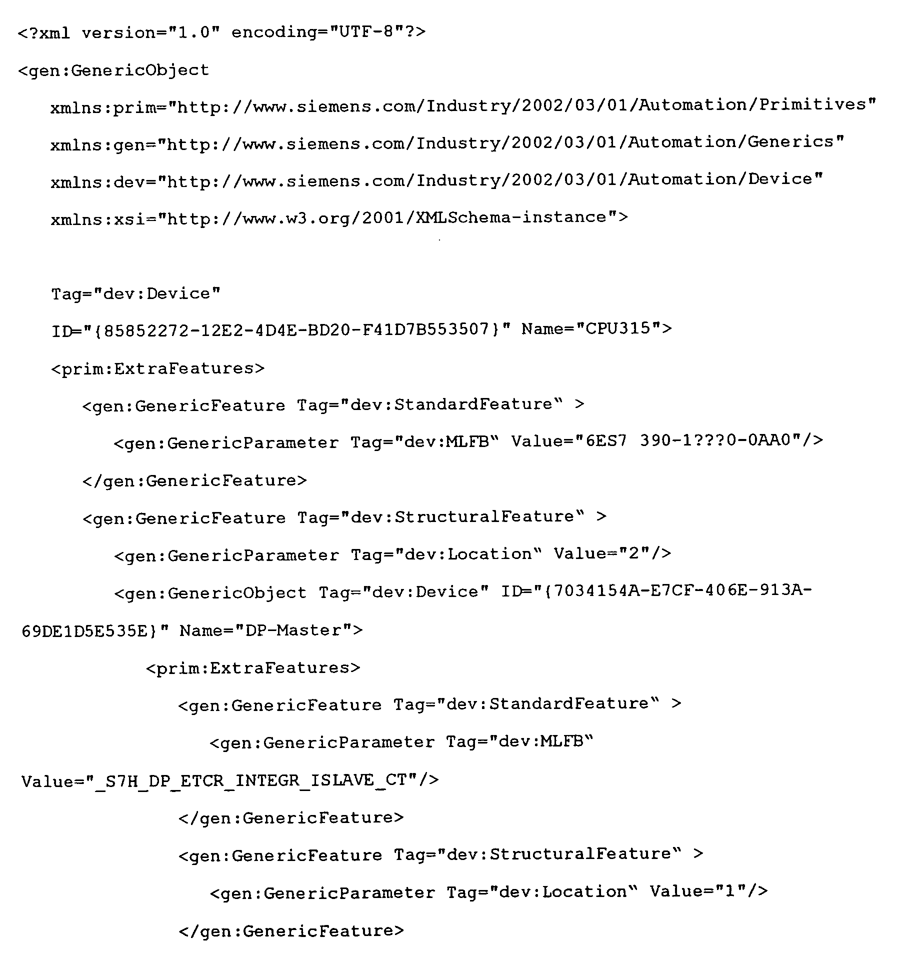

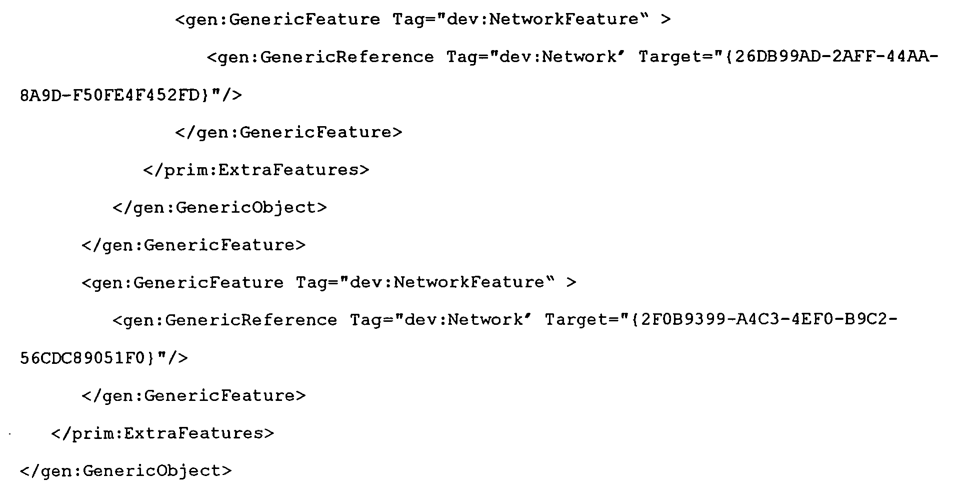

Bei der Transformation von der spezifischen in die generische Darstellung wird jeweils der Tag-Name der XML-Elemente als Wert des Attributs Tag in der generischen Darstellung verwendet. Über das Schema ist bekannt, um welche Typen (Objekt, Feature, Parameter, etc.) es sich handelt, und es können die entsprechenden Element-Namen aus dem generischen Schema (GenericObject, GenericFeature, GenericParameter, etc.) ausgewählt werden. Beim Einlesen von Objekten kann diese Umwandlung transparent für die lesenden Applikationen vorgenommen werden, wenn diese Schnittstellen wie zum Beispiel
ReadObject(string TagName, ...)
ReadFeature(string TagName, ...)
ReadParameter(string TagName, ...)
...
verwenden und die Daten nicht direkt auf XML-Ebene (DOM, SAX) lesen.

In FIG 1 wird die Grundidee des Objektmodells 10 in Form eines UML-Diagramm dargestellt. UML (= Unified Modeling Language) ist eine durch die Object Management Group (OMG) standardisierte graphische Sprache zur Beschreibung objektorientierter Modelle. Im Mittelpunkt des Objektmodells 10 steht der Typ Objekt 100. Im Ausführungsbeispiel besitzt jedes Objekt 100 die Attribute ID 2, Version 4 und Name 3. Die ID 2 ist hierbei eine eindeutige Bezeichnung, die sich nie ändert. Die ID 2 kann zum Beispiel eine GUID (= Globally Unique Identifier) sein. Sie dient zur eindeutigen Identifizierung des Objektes 100, d. h. über die ID 2 kann das Objekt 100 absolut, also ohne Bezug zu seiner Umwelt bzw. seinem Kontext, referenziert werden. Jedem Objekt 100 wird ein Name 3 zugeordnet. Über den Namen 3 kann das Objekt 100 ebenfalls referenziert werden.

Wie im Diagramm von FIG 1 zu sehen, bilden Features 20 die Substruktur der Objekte 100. Sie gruppieren die Parameter 30, Referenzen 60, Sub-Objekte 100, Connectoren 40 und Connections 50 des Objekts 100 und können auch selbst wieder über Features 20 strukturiert werden. Die Verknüpfung zum SubObjekt 100 ist im UML-Diagramm von FIG 1 mit dem Bezugszeichen 70 gekennzeichnet, das SubObjekt 100 erhält jedoch das gleiche Bezugszeichen wie das oben erwähnte Objekt 100, da es die gleiche Struktur aufweist. Grundlage der Gruppierung sind zum einen die logische Zusammengehörigkeit der Bestandteile des Objekts 100 zu einer bestimmten "Sicht" (z.B. HMI, Hardware, Software) auf das Objekt 100. Mit dieser Unterteilung können die jeweiligen Tools leichter jene Objekt-Daten lesen, die sie interessieren.

Zum anderen bilden Features 20 die Einheit der Erweiterung von Objekten 100 um produktspezifische Bestandteile. Features 20 können somit zur Erweiterung von bestehenden Objekttypen um spezifische weitere Objektinformationen verwendet werden, die zum Objekt 100 hinzugefügt werden sollen und evtl. nur für bestimmte Applikationen von Interesse sind. Dieser Weg wurde im Gegensatz zur Erweiterung durch Ableitung gewählt, um Produkte, die mit bestehenden Typen arbeiten, nicht inkompatibel werden zu lassen. Wenn ein Objekttyp um Daten eines anderen Produkts erweitert werden soll, so wird ein neues Feature 20 definiert, das dann zu dem bestehenden Objekt 100 dazugefügt wird. Die Definition des ursprünglichen Objekttyps bleibt dabei bestehen, damit die Tools, die mit dem bisherigen Objekttyp arbeiten, nicht beeinträchtigt werden. Durch die Erweiterung über neue Features 20 muss auf bestehende Applikationen keine Rücksicht genommen werden. Features 20, die einen im Bezug auf das jeweilige Objekt 100 eindeutigen Namen 21 tragen, haben jeweils 1 zu n - Beziehungen zu Parametern 30, Connectoren 40 und Connections 50. Des Weiteren können die Objekte 100 über Features 20 auch Sub-Objekte 100 aggregieren und Referenzen 60/Relationen zu anderen Objekten 100 enthalten. Über die Aggregation entsteht ein Baum aus Objekten 100. Durch die Referenzen 60 können Querbezüge zwischen den Elementen dieses Baums dargestellt werden. Die Parameter 30, Connectoren 40 und Connections 50 stellen bildlich gesprochen das Laub des Baumes, also im Bezug auf die zu modellierenden Datenbestände die eigentlichen Daten dar. Features 20 können selbst wieder Features 20 enthalten. Objekte, Features und Referenzen stellen die Struktur-Information eines Datenbestandes dar.

Die Identität ID 2 eines Objektes 100 wird nach der Erzeugung nie mehr geändert. Insbesondere bleibt sie bestehen beim Verschieben des Objekts 100 innerhalb eines Datenbestandes und beim Einfügen des Objektes 100 in andere Bestände. Neben einer ID 2 hat jedes Objekt 100 einen (logischen) Namen 3. Der Name 3 kann im Gegensatz zur ID 2 geändert werden und muss auch nicht global eindeutig sein. Wenn jedoch Eindeutigkeit unter den Namen 2 der SubObjekte 100 in jedem Feature 20 herrscht, dann können diese zur Bildung sogenannter Pfad-Referenzen (Referenzen, die ein Objekt 100 im Bezug auf seine Umwelt referenzieren) dienen.

Es werden keine Rollen von Objekten 100 explizit spezifiziert. Die Rollen werden vielmehr implizit durch die Position eines Objekts 100 im Verhältnis zu anderen Objekten 100 dargestellt, beziehungsweise sie werden durch die Referenzen 60 von und zu anderen Objekten 100 ausgedrückt.

Durch die Verwendung dieses Darstellungsprinzips (Objekt 100, Feature 20, etc.) kann erreicht werden, dass alle damit modellierten Datenbestände gemeinsame Grundstrukturen beinhalten, mit denen ein universelles Verständnis möglich ist, sprich Applikationen auf einheitliche Weise auf die Inhalte zugreifen bzw. in den Objektgeflechten navigieren können. Ferner können beliebige, heute noch nicht bekannte Abbildungsanforderungen erfüllt werden, die dann auch wieder in dieses grundsätzliche Verständnis der Einheitlichkeit einfließen, und von anderen Applikationen verstanden werden. Applikationen die sich diesem einheitlichen Format zukünftig anpassen, genießen dann automatisch auch die Kompatibilität mit allen vorherigen.

Der Datenaustausch zwischen verschiedenen Software-Applikationen wird vereinfacht durch die Strukturierung, Speicherung und Verarbeitung gemäß dem Objektmodell 10, wobei das Objektmodell 10 mindestens ein erstes Element aufweist, welches einem Typ Objekt 100 entspricht, wobei der Typ Objekt 100 folgende Merkmale aufweist:
- eine eindeutige Bezeichnung 2 der Identität des Objekts 100 zur absoluten Referenzierung des Objekts 100,
- einen logischen Namen 3 zur Benennung des Objekts 100 und
- mindestens eine Verknüpfung 6 mit einem zweiten Element, welches einem Typ Feature 20 entspricht, wobei der Typ Feature 20 folgende Merkmale aufweist:
- einen im Bezug auf das jeweilige verknüpfte Objekt 100 eindeutigen Namen 21 und
die Möglichkeit der Verknüpfung mit weiteren Elementen vom Typ Objekt 100, mit weiteren Elementen vom Typ Feature 20 und mit Daten 30, 40, 50.

Die Anwendung des Objektmodells 10 wird mit einem weiteren Ausführungsbeispiels näher erläutert. Darzustellen sei ein Symbol, wie diese z. B. in der Automatisierungstechnik üblich sind. So ein Symbol enthält neben seinem Namen noch einen Typ, eine Richtung und einen Wert. Das zu zeigende Beispiel-Symbol sei dieses:
S7_AO_Niveau E0.3
Wobei "S7_AO_Niveau" der Name des Symbols ist. Typ und Richtung sind zusammen mit dem Wert in der Bezeichnung E0.3 in der Weise verschlüsselt, das "E" die (deutschsprachige) Richtungsbezeichnung für "Eingang" bedeutet, und in der Punkt-Darstellung sich die Adressierung eines Bits innerhalb eines Wortes ausdrückt. Das Beispiel-Symbol würde gemäß dem obigen Objektmodell 10 wie folgt dargestellt werden, und auch validierbar sein, wenn man das oben gezeigte allgemeine Schema noch mit den anschließend gezeigten symbol-spezifischen Verfeinerungen versieht. Eine Instanz des Beispiel-Symbols "S7_AO_Niveau" ist als XML-Schema folgendermaßen definiert:

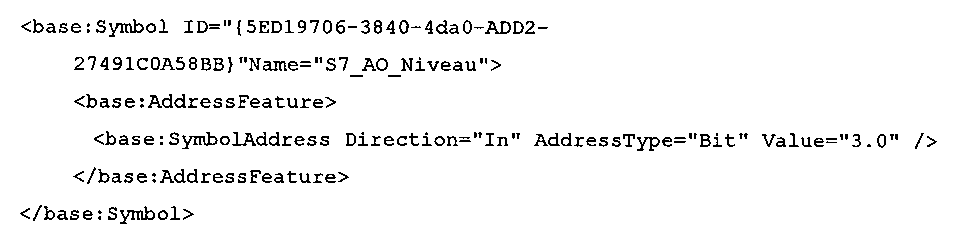

Im Folgenden werden die genannten symbol-spezifischen Verfeinerungen beschrieben, mit deren Hilfe ein so beschriebenes Symbol validierbar wird. Als Erstes ist vom allgemeinen Typ "Objekt" ein symbol-spezifischer Objekttyp (hier genannt "SymbolT") abzuleiten. Dieser enthält wie oben erklärt auch ein Feature (da er ja abgeleitet ist), nämlich wiederum ein symbol-spezifisches Feature. Es sei "SymbolAdressFeatureT" genannt.

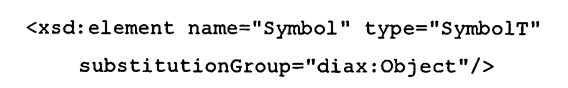

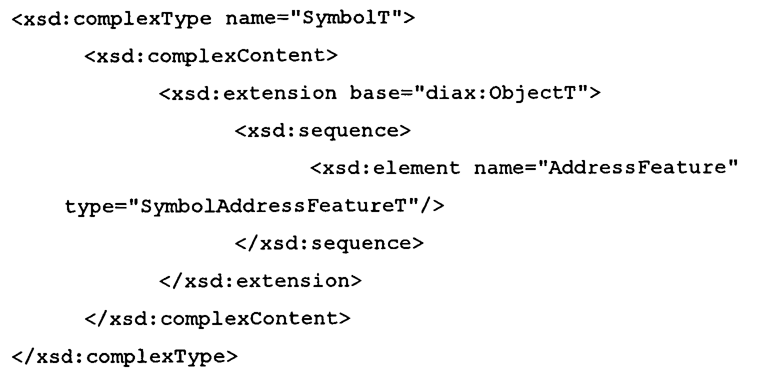

Dieses symbol-spezifische Feature (genannt "SymbolAddressFeatureT" - wobei "T" für Typ steht) enthält gemäß obigem Basis-Objekt einen Parameter, nämlich wiederum einen symbol-spezifischen, der "SymbolAddressT" heißt:

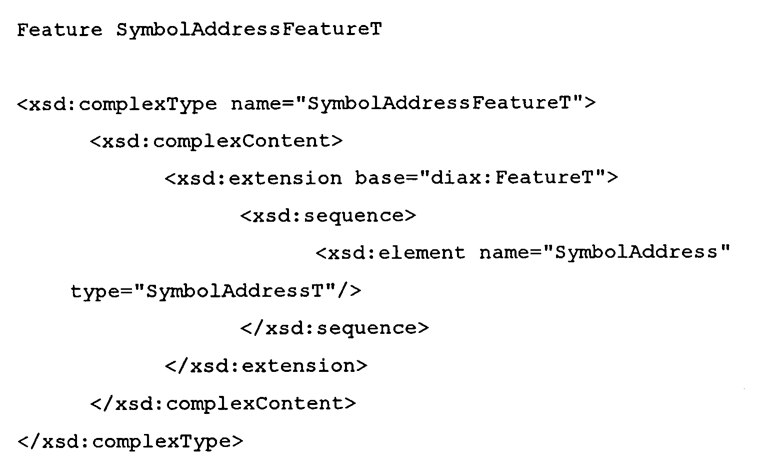

Der symbol-spezifische Parameter "SymbolAddressT" wird im Folgenden definiert. Er enthält die restlichen Informationen: Datentyp, Richtung, Wert.

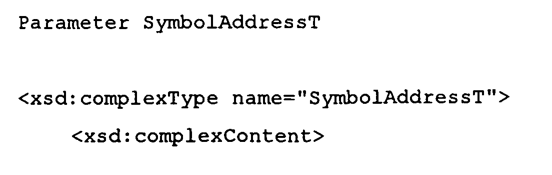

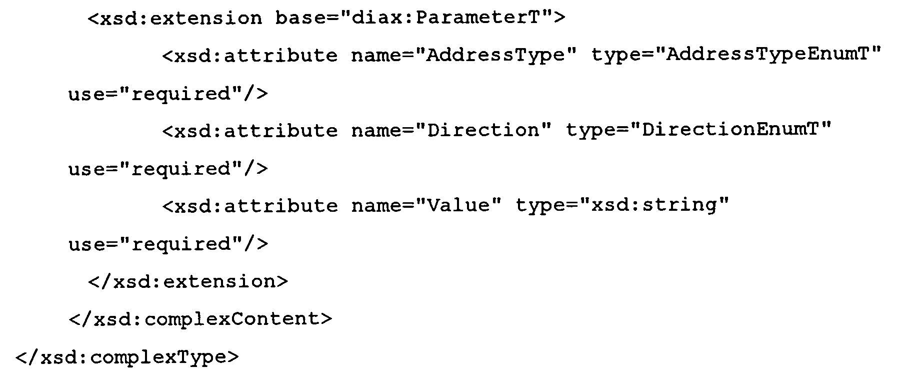

Mit weiteren Spezifikationen sind die im Adress-Parameter verwendeten Attribute ,Typ' und ,Richtung' definiert. Der "Wert" ist letztlich nur ein xsd:string ohne Einschränkungen. Damit genügt das obige Beispiel-Symbol dem generischen Grund-Objektmodell 10 und ist voll validierbar festgelegt.

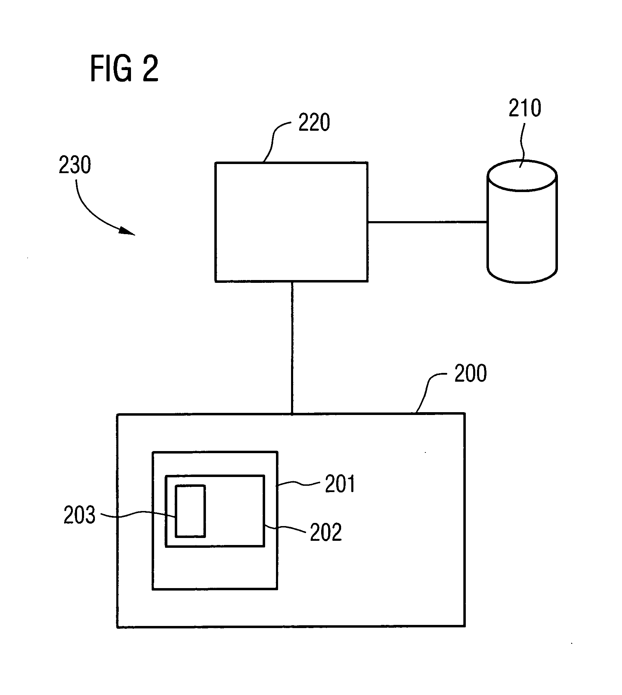

Üblicherweise sind Datenbestände 210, wie sie im Engineering 220 von Automatisierungssystemen 230 vorkommen, als umfangreiche, komplexe hierarchische Strukturen beschaffen. Um deren strukturellen Inhalt einheitlich, und transparent für andere zu machen, kann ein einfaches erfindungsgemäßes Objektmodell 10 als zentrales, generisches Grundelement der Darstellung definiert werden. Das sei im Folgenden am Beispiel eines Hardware-Projekts 200 mit seinem strukturellen Aufbau demonstriert (siehe FIG 2). Das mit "Projekt" 200 benannte hierarchische Gefüge beinhalte eine Verarbeitungsstation 201, welche als "S7 300" bezeichnet wird. Diese enthalte auf einem "Rack UR" 202 eine "CPU 315" 203, die unter vielem anderen in ihrem Symbol-Container das Symbol "S7_AO_Niveau" enthält. Zur validierbaren Darstellung dieser Strukturen sind natürlich wiederum spezifische Verfeinerungen der Standard Schemas notwendig (zum Beispiel das StructuralFeature, das den Aufbau eines Objektes beschreibt), auf deren Darstellung hier jedoch verzichtet wird. Hier sei der Hinweis genug, dass derer beliebig viele durch entsprechende Ableitung erstellt werden können, wodurch alle dargestellten Daten dann auch systematisch validierbar sind.

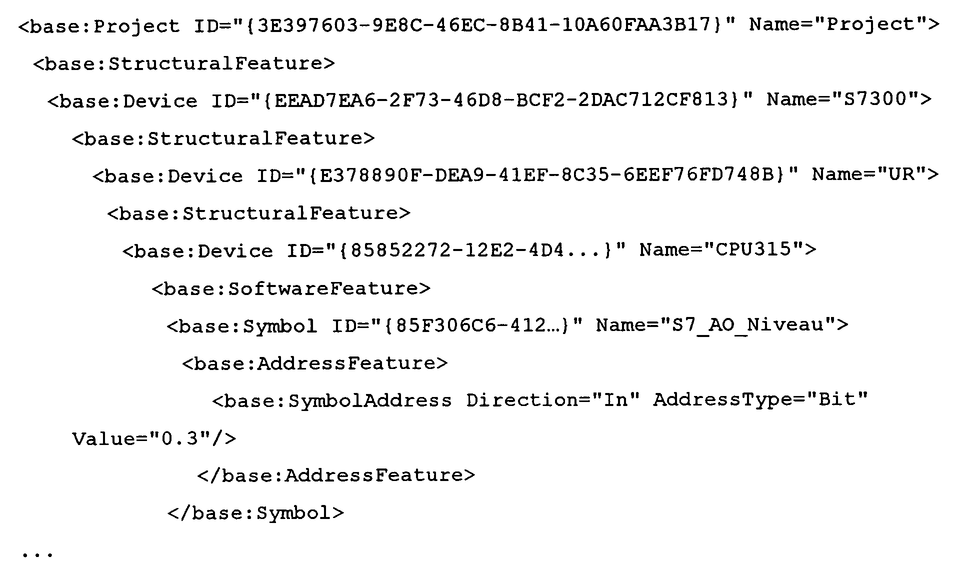

Zusammenfassend betrifft die Erfindung somit ein System sowie ein Verfahren zur Strukturierung, Speicherung und Verarbeitung von Daten. Um die Verarbeitung von Daten zu vereinfachen, die gemäß unterschiedlichen Schemata strukturiert sind, verwendet das System ein erstes Schema zur Beschreibung der Struktur der Daten, welches ein Objektmodell 10 mit Grundtypen definiert, wobei die Grundtypen unterschiedliche Strukturierungsformen der Daten beschreiben, ein zweites Schema zur generischen Beschreibung der Struktur der Daten, welches auf dem ersten Schema basiert, wobei das zweite Schema von den Grundtypen abgeleitete generische Typen definiert und ein drittes Schema zur spezifischen Beschreibung der Struktur der Daten, welches auf dem ersten Schema basiert, wobei das dritte Schema von den Grundtypen abgeleitete spezifische Typen definiert, wobei mit Hilfe des zweiten und des dritten Schemas beliebige Daten strukturiert geschrieben, gespeichert und gelesen werden können.

## Patentansprüche

1. System zur Strukturierung, Speicherung und Verarbeitung von Daten,
- mit einem ersten Schema zur Beschreibung der Struktur der Daten, welches ein Objektmodell (10) mit Grundtypen definiert, wobei die Grundtypen unterschiedliche Strukturierungsformen der Daten beschreiben,
- mit einem zweiten Schema zur generischen Beschreibung der Struktur der Daten, welches auf dem ersten Schema basiert,
wobei das zweite Schema von den Grundtypen abgeleitete generische Typen definiert,
- mit einem dritten Schema zur spezifischen Beschreibung der Struktur der Daten, welches auf dem ersten Schema basiert,
wobei das dritte Schema von den Grundtypen abgeleitete spezifische Typen definiert,
wobei mit Hilfe des zweiten und des dritten Schemas beliebige Daten strukturiert geschrieben, gespeichert und gelesen werden können.

2. System nach Anspruch 1,
**dadurch gekennzeichnet,**
**dass** zur Transformation von Daten, welche gemäß dem dritten Schema strukturiert sind, in Daten, welche gemäß dem zweiten Schema strukturiert sind, jeweils ein Kennzeichnungsname von Elementen des dritten Schemas den Wert eines Attributs in Elementen des zweiten Schemas bildet.

3. System nach Anspruch 1 oder 2,
**dadurch gekennzeichnet,**
**dass** die Schemata mittels einer erweiterbaren Auszeichnungssprache beschrieben werden.

4. Verfahren zur Strukturierung, Speicherung und Verarbeitung von Daten, bei welchem
- ein erstes Schema eine Struktur der Daten beschreibt und ein Objektmodell (10) mit Grundtypen definiert, wobei die Grundtypen unterschiedliche Strukturierungsformen der Daten beschreiben,
- ein zweites Schema die Struktur der Daten generisch beschreibt, wobei das zweite Schema auf dem ersten Schema basiert und von den Grundtypen abgeleitete generische Typen definiert,
- ein drittes Schema die Struktur der Daten spezifisch beschreibt, wobei das dritte Schema auf dem ersten Schema basiert und von den Grundtypen abgeleitete spezifische Typen definiert,
wobei mit Hilfe des zweiten und des dritten Schemas beliebige Daten strukturiert geschrieben, gespeichert und gelesen werden.

5. Verfahren nach Anspruch 4,
**dadurch gekennzeichnet,**
**dass** zur Transformation von Daten, welche gemäß dem dritten Schema strukturiert sind, in Daten, welche gemäß dem zweiten Schema strukturiert sind, jeweils ein Kennzeichnungsname von Elementen des dritten Schemas den Wert eines Attributs in Elementen des zweiten Schemas bildet.

6. Verfahren nach Anspruch 4 oder 5,
**dadurch gekennzeichnet,**
**dass** die Schemata mittels einer erweiterbaren Auszeichnungssprache beschrieben werden.
